# EUROPEAN PATENT APPLICATION

(11) **EP 3 169 122 A1**
(43) Date of publication of application: **17.05.2017**
(21) Application number: 15306817.6
(22) Date of filing: 16.11.2015
(51) Int. Cl.: H04W 68/04

(54) **PAGING OPTIMIZATION IN A MOBILE NETWORK**

(71) Applicant: ALCATEL LUCENT, 92100 Boulogne-Billancourt (FR)
(72) Inventor: DREVON, Nicolas, 91620 NOZAY (FR); GODIN, Philippe, 91620 NOZAY (FR)
(74) Representative: El Manouni, Josiane

(57) **Abstract**

An embodiment of the invention is a Core Network CN entity, such as MME or SGSN, capable of sending a Paging message to a Radio Access Network entity, such as eNB or RNC or BSC, for paging of a User Equipment UE, said CN entity configured to:
- provide, in a Paging message containing recommended cells information for said paging, said recommended cells information including cells visited by said UE together with a duration of stay of the UE in each visited cell, a paging validity time associated with a maximum referred to as cell-age-max for the age, at the time of said paging, of the UE visit to a cell.

## Description

The present invention generally relates to mobile communication networks and systems.

Descriptions of mobile networks and systems can be found in the literature, such as in particular in Technical Specifications published by standardization bodies such as for example 3GPP (3^{rd} Generation Partnership Project).

In a mobile system, a mobile terminal also called User Equipment UE, has access to a mobile network providing mobile communication services. A mobile network generally comprises a Core Network (CN) accessed via a Radio Access Network (RAN).

An example of 3GPP mobile system is EPS (Evolved Packet System), specified in particular in 3GPP TS 23.401. An EPS network comprises a Core Network called EPC (Evolved Packet Core) that can be accessed by a Radio Access Network (RAN) such as E-UTRAN or UTRAN/GERAN. EPC entities include Mobility Management Entity (MME) for E-UTRAN access to EPC, or Serving GPRS Support Node (SGSN) for UTRAN/GERAN access to EPC. E-UTRAN entities include eNodeB (eNB). Each RAN entity controls one or more cells.

In such systems, mobility is supported by means of various mechanisms or procedures, such as in particular a paging procedure performed when there is a need to reach a User equipment UE in idle mode for an incoming call or session.

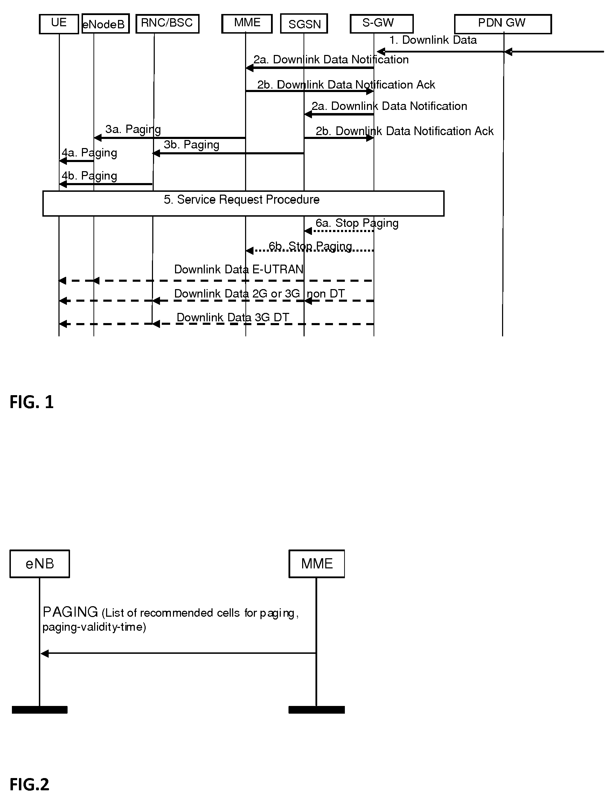

In EPS for example, when a downlink packet is received for an UE in idle mode, a network triggered service request procedure (recalled in figure 1 taken from 3GPP TS 23.401) is performed, including a paging procedure.

For E-UTRAN access to EPC for example, the paging procedure includes sending Paging messages by the MME serving the UE, on S1AP interface, to eNBs belonging to the TAs in which the UE is registered, and paging the UE by the eNBs on the radio interface, in cells belonging to TAs in which the UE is registered. In the same way, for UTRAN/GERAN access to EPC, the paging procedure includes sending Paging messages by the SGSN serving the UE, to RNCs/BSCs belonging to the Routing Area RA in which the UE is registered, and paging the UE by the RNCs/BSCs in cells belonging to the RA in which the UE is registered.

As recognized by the inventors and as will be described with more detail later, there is a need for optimization of the current paging procedure, in particular to reduce paging load on radio interface. More generally, there is a need to improve performances of such systems.

Embodiments of the present invention in particular address such needs.

These and other objects are achieved, in one aspect, by a Core Network CN entity, such as MME or SGSN, capable of sending a Paging message to a Radio Access Network entity, such as eNB or RNC or BSC, for paging of a User Equipment UE, said CN entity configured to:
- provide, in a Paging message containing recommended cells information for said paging, said recommended cells information including cells visited by said UE together with a duration of stay of the UE in each visited cell, a paging validity time associated with a maximum referred to as cell-age-max for the age, at the time of said paging, of the UE visit to a cell.

These and other objects are achieved, in another aspect, by a Radio Access Network RAN entity, such as eNB or RNC or BSC, capable of receiving a Paging message from a Core Network entity such as MME or SGSN, for paging of a User Equipment UE, said RAN entity configured to:
- receive, in a Paging message containing recommended cells information for said paging, said recommended cells information including cells visited by said UE together with a duration of stay of the UE in each visited cell, a paging validity time associated with a maximum referred to as cell-age-max for the age, at the time of said paging, of the UE visit to a cell,
- determine if a recommended cell is eligible for paging the UE, based on information including said duration of stay and paging validity time.

These and other objects are achieved, in another aspect, by method(s) for paging optimisation in a mobile network, said method comprising at least one step performed by at least one of said CN entity and RAN entity.

Some embodiments of apparatus and/or methods in accordance with embodiments of the present invention are now described, by way of example only, and with reference to the accompanying drawings, in which:
- Figure 1 is intended to recall paging performed for example during a network triggered service request procedure in EPS,
- Figure 2 is intended to illustrate an example of Paging message sent by a MME to an eNB according to embodiments of the invention,
- Figure 3 is intended to illustrate, in an example, parameters such as duration of stay in a cell and age of a visit to a cell,
- Figure 4 is intended to illustrate, in the example of figure 3, eligible or ineligible cells for paging optimization according to embodiments of the invention.

### Abbreviations

- BSC: Base Station Controller
- CN: Core Network
- eNB: eNodeB
- EPC: Evolved Packet Core
- EPS: Evolved Packet System
- E-UTRAN: Evolved UMTS Terrestrial Radio Access Network
- IE: Information Element
- LTE: Long Term Evolution
- MME: Mobility Management Entity
- RAN: Radio Access Network
- RNC: Radio Network Controller
- SGSN: Serving GPRS Support Node
- UE: User Equipment
- UTRAN: UMTS Terrestrial Radio Access Network

### Description of various aspects and/or embodiments of the invention

Following description of various aspects and/or embodiments of the invention will be made by way of example for E-UTRAN access to EPC. However, even if embodiments and/or aspects of the invention apply mainly to LTE (4G) technology, embodiments of the invention could apply to any cellular technology e.g. UTRAN, GERAN, 5G, etc.

In Rel-13, a few paging optimizations have been introduced via CR 2892r3 to 3GPP TS 23.401 (http://www.3gpp.org/ftp/tsg_sa/WG2_Arch/TSGS2_110_Dubrovnik/Docs/S2-152683.zip), in which at S1 Release (stage 3 UE Context Release Complete) message to the MME, the last serving eNB provides the MME with two lists: the list of recommended cells for paging, which is transparent to the Core Network, and the list of recommended eNBs for paging, which allows the MME to know which eNBs to go through for paging the UE.

RAN3 is currently working on a CR to 3GPP TS 36.413, based on these SA2 principles: they have endorsed as a baseline document http://www.3gpp.org/ftp/tsg_ran/WG_Iu/TSGR3_89bis/Docs/R3-152342.zip. When a call/session ends, the serving eNB sends a S1 Release (stage 3 UE Context Release Complete) message to the MME with the list of recommended cells and the corresponding duration of stay of the UE for each of those cells which the UE visited in the past (that list is transparent to the Core Network), but also the list of corresponding eNBs and the corresponding duration of stay of the UE in each eNB which the UE visited in the past has been proposed.

With this information, if the UE needs to be paged some time after the end of the last call/session, the MME can determine which eNBs in the list of recommended eNBs to be paged, according to the age of the UE visit in each eNB. To each of these eNBs, the MME will provide the list of recommended cells with the corresponding duration of stay for each cell.

But with only the duration of stay in each cell, the eNBs receiving the paging request from the MME will not be able to determine the age of the UE visit to that cell, and hence will not be able to know which cells are eligible to page the UE.

Embodiments of the invention in particular enable the eNBs receiving the paging request from the MME to be able to know which cells are eligible to page the UE in relation with the age of the UE visit to that cell.

The current Paging message over S1 interface is recalled below.

This message is sent by the MME. As recalled in the table below, this message currently contains following IEs, where "Assistance Data for Paging" is the new Information Element as proposed in R3-151804, as recalled above.

### PAGING

### Direction: MME → eNB

| **IE/Group Name** | **Presence** | **Range** | **IE type and reference** | **Semantics description** | **Criticality** | **Assigned Criticality** |
|---|---|---|---|---|---|---|
| Message Type | M | | 9.2.1.1 | | YES | ignore |
| UE Identity Index value | M | | 9.2.3.10 | | YES | ignore |
| UE Paging Identity | M | | 9.2.3.13 | | YES | ignore |
| Paging DRX | O | | 9.2.1.16 | | YES | ignore |
| CN Domain | M | | 9.2.3.22 | | YES | ignore |
| **List of TAIs** | | *1* | | | YES | ignore |
| >TAI List Item | | *1* .. *<maxnoofTAls>* | | | EACH | ignore |
| >>TAI | M | | 9.2.3.16 | | - | |
| CSG Id List | | *0*..*1* | | | GLOBAL | ignore |
| >CSG Id | | *1* .. *<maxnoofCSGId>* | 9.2.1.62 | | - | |
| Paging Priority | O | | 9.2.1.78 | | YES | ignore |
| UE Radio Capability for Paging | O | | 9.2.1.98 | | YES | ignore |
| Assistance Data for Paging | O | | 9.2.1.x2 | | YES | ignore |

| **Range bound** | **Explanation** |
|---|---|
| maxnoofTAls | Maximum no. of TAls. Value is 256. |
| maxnoofCSG Ids | Maximum no. of CSG Ids within the CSG Id List. Value is 256. |

### Assistance Data for Paging

This IE provides assistance information for paging optimization, and in turn contains following IEs.

| **IE/Group Name** | **Presence** | **Range** | **IE type and reference** | **Semantics description** |
|---|---|---|---|---|
| Assistance Data For Recommended Cells | O | | 9.2.1.x21 | |
| Assistance Data for CE capable UEs | O | | 9.2.1.x31 | |
| Paging Attempt Information [FFS] | O | | 9.2.1.x41 | |

### Assistance Data for Recommended Cells

This IE provides assistance information for paging in recommended cells, and in turn contains following IE.

| **IE/Group Name** | **Presence** | **Range** | **IE type and reference** | **Semantics description** |
|---|---|---|---|---|
| Recommended Cells for Paging | M | | 9.2.1.x23 | |

### Recommended Cells for Paging

This IE is transparent to the EPC.

This IE contains the recommended cells for paging, and in turn contains following IEs.

| **IE/Group Name** | **Presence** | **Range** | **IE Type and Reference** | **Semantics Description** |
|---|---|---|---|---|
| **Recommended Cell List** | | *1* | | |
| **>Recommended Cell Item IEs** | | *1* .. *<maxnoofRe commended Cells>* | | Includes visited and non-visited cells, where visited cells are listed in the order the UE visited them with the most recent cell being the first in the list. Non-visited cells are included immediately after the visited cell they are associated with. |
| >>E-UTRAN CGI | M | | 9.2.1.38 | |
| >>Time Stayed in Cell | O | | INTEGER (0..4095) | This is included for visited cells and indicates the time a UE stayed in a cell in seconds. If the UE stays in a cell more than 4095 seconds, this IE is set to 4095. |

| **Range bound** | **Explanation** |
|---|---|
| maxnoofRecommendedCells | Maximum no. of recommended Cells, the maximum value is 16 |

Embodiments and/or aspects of the invention include adding a "paging-validity-time" to the Paging message sent to each eNB in charge of paging the UE, as illustrated in figure 2.

Embodiments and/or aspects of the invention include adding an Information Element "paging-validity-time" either inside or outside the "Assistance Data for Paging" IE, in a Paging message sent by MME to eNB over S1 interface.

Embodiments and/or aspects of the invention are related to the way an eNB receiving the above information determines which cells should be used for paging the UE:
In an example, each eNB can determine whether a cell(N) is eligible for paging the UE by applying a formula such as :
   if cell(1) duration-of stay + cell(2) duration-of-stay + .... + cell(N-1) duration-of-stay < paging-validity-time then cell(N) is eligible for paging, otherwise cell(N) is not eligible for paging

Note that the MME could also apply same type of formula for determining which eNBs among the recommended eNBs should be in charge of paging the UE:
if eNB(1) duration-of stay + eNB(2) duration-of-stay + .... + eNB(N-1)
duration-of-stay < paging-validity-time then eNB(N) is eligible for paging, otherwise eNB(N) is not eligible for paging.

Each eNB receiving the list of recommended cells for paging will thus be able to determine which of these cells is eligible for paging the UE. This will reduce the paging load because paging will not be performed on cells the UE visited too long time ago, where the UE has less chance to be visiting at the time of paging.

In contrast, in the existing solution (recalled above), the eNB receiving the list of recommended cells will not be able to determine which of these cells are eligible for paging the UE, and hence will need to page all the cells in the list of recommended cells or at least cannot optimize the paging area based on the age when the cell was last visited.

The paging validity time is typically related to the maximum for the age of the UE visit to a cell by a fomula such as:
Paging validity time = maximum age of UE visit to a cell - T
Where T is the duration in the MME between the time MME received the list of recommended cells from the last serving eNB and the time of the new paging.

Embodiments and/or aspects of the invention may also be described in the following way.

As said above, In Rel-13, a few paging optimisations have been introduced via CR 2892r3 to 23.401 (S2-152683), in which at S1 Release the last serving eNB provides the MME with two lists: the list of recommended cells for paging, which is transparent to the Core Network, and the list of recommended eNBs for paging, which allows the MME to know which eNBs to go through for paging the UE.

RAN3 agreed that the eNB keeps the strategy of which of its own cells to page.

As said above, if the list of recommended cells only contains the list of last 16 cells visited by the UE and the duration of stay in each of them, the eNBs in charge of paging would not be able to determine when the UE has really entered/left a cell: they can only page in all the cells of the list of recommended cells.

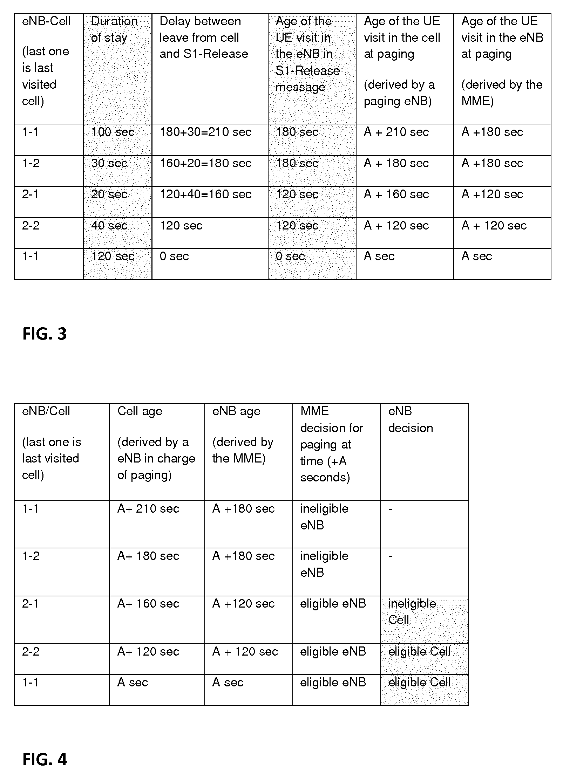

As depicted in an example in figure 3, let's assume that, when a paging is required for a terminating call/session, the last S1-Release (with the recommended eNBs and cells for paging, as recalled above) was received "A" seconds ago. The MME and the eNB(s) in charge of paging the UE should be able to determine respectively the age (at paging) of each eNB visit and the age (at paging) of each cell visit.

An example of values of the age of eNB visit (also noted hereafter "eNB-age") and of the age of cell visit (also noted hereafter "cell-age") is considered in figure 3, for an example of values of duration of stay (in seconds), and for an example of cells visited by the UE including, in the order the UE visited these cells, cells noted 1-1, 1-2, 2-1, 2-2, 1-1 (where e.g. cell 1-1 designates cell 1 of eNB 1), with the last cell (1-1) being the last visited cell.

The question is who decides that a cell is eligible for paging or not.

The eNBs in charge of paging will consider a cell eligible for paging if the age of the cell visit is not older than a maximum noted "cell-age-max". Similarly, the MME will consider an eNB eligible for paging if eNB visit age is not older than a maximum noted "eNB-age-max".

Some conditions must be satisfied. In the example of figure 4, if "cell-age-max" in two eNBs are different, it may happen that eNB 1 does not page cell 1-1 while eNB 2 pages cell 2-2 that was visited before cell 1-1. Therefore "cell-age-max" (used by the eNBs) and "eNB-age-max" (used by the MME) should be equal.

There are two possibilities:
1. The source eNB decides of the "cell-age-max". As several source eNBs will provide lists of cells, the same cell-age-max should be configured in all the eNBs. There is a risk of misconfiguration. And the MME would not anymore be the decision point for paging strategy. This is not in line with RAN3 decisions.
2. The MME decides of the "cell-age-max". In this case, the "paging-validity-time" = "cell-age-max" - "age of the list of recommended cells information" should be provided by the MME to each eNB in charge of paging. Each eNB may determine whether a cell(N) is eligible for paging or not e.g. by applying:
   if cell(1) duration-of stay + cell(2) duration-of-stay + .... + cell(N-1) duration-of-stay < paging-validity-time then cell(N) is eligible for paging, otherwise cell(N) is ineligible for paging
      The MME could also apply same type of formula for determining which eNBs among the recommended eNBs should be in charge of paging the UE:
      if eNB(1) duration-of stay + eNB(2) duration-of-stay + .... + eNB(N-1) duration-of-stay < paging-validity-time then eNB(N) is eligible for paging, otherwise eNB(N) is ineligible for paging

Based on the age of an eNB, and on MME homogeneous configuration (due to inter-MME changes), the paging MME may thus decide whether an eNB should be used for paging the UE and determine a "paging-validity-time" = "cell-age-max" - "age of the list of recommended cells information" to be added to the S1-paging messages sent to the eNBs. The "paging-validity-time" should be the same for the MME and all eNBs in charge of paging. The eNBs in charge of paging may thus derive whether a cell is eligible for paging or not thanks to the information in the list of recommended cells (duration of stay).

Various aspects of the invention include (though not being limited to) following aspects.

An aspect is a Core Network CN entity, such as MME or SGSN, capable of sending a Paging message to a Radio Access Network entity, such as eNB or RNC or BSC, for paging of a User Equipment UE.

Various embodiments may be provided, including (though not being limited to) following embodiments, which may be taken alone or in combination, according to various combinations.

In an embodiment, said CN entity is configured to:
- provide, in a Paging message containing recommended cells information for said paging, said recommended cells information including cells visited by said UE together with a duration of stay of the UE in each visited cell, a paging validity time associated with a maximum referred to as cell-age-max for the age, at the time of said paging, of the UE visit to a cell.

In an embodiment, said CN entity is configured to:
- determine said paging validity time as "cell-age-max" - "age of the recommended cells information", where "age of the recommended cells information" is the time elapsed between the sending of said Paging message to the RAN entity and the reception of the recommended cells information by the CN entity.

In an embodiment:
- "cell-age-max" is configured in said CN entity.

In an embodiment, said CN entity is configured to:
- receive said recommended cells information at release of a signalling connection established for said UE, such as during a S1-Release procedure.

Another aspect is a Radio Access Network RAN entity, such as eNB or RNC or BSC, capable of receiving a Paging message from a Core Network entity such as MME or SGSN, for paging of a User Equipment UE.

Various embodiments may be provided, including (though not being limited to):
In an embodiment, said RAN entity is configured to:
   - receive, in a Paging message containing recommended cells information for said paging, said recommended cells information including cells visited by said UE together with a duration of stay of the UE in each visited cell, a paging validity time associated with a maximum referred to as cell-age-max for the age, at the time of said paging, of the UE visit to a cell,
   - determine if a recommended cell is eligible for paging the UE, based on information including said duration of stay and paging validity time.

In an embodiment, said RAN entity is configured to:
- determine if cell(1) duration-of stay + cell(2) duration-of-stay + .... + cell(N-1) duration-of-stay < paging-validity-time
- if cell(1) duration-of stay + cell(2) duration-of-stay + .... + cell(N-1) duration-of-stay < paging-validity-time, decide that cell(N) is eligible for paging,
- otherwise decide that cell(N) is not eligible for paging,
where "cell(n) duration-of-stay" is the duration of stay in a cell noted cell(n),
where cell(1), cell(2), .... cell(N-1), cell(N) include cells listed in the order the UE visited the cells.

Other aspects relate to method(s) for paging optimisation in a mobile network, said method comprising at least one step performed by at least one of the thus configured CN entity and RAN entity.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

## Claims

1. A Core Network CN entity, such as MME or SGSN, capable of sending a Paging message to a Radio Access Network entity, such as eNB or RNC or BSC, for paging of a User Equipment UE, said CN entity configured to:
- provide, in a Paging message containing recommended cells information for said paging, said recommended cells information including cells visited by said UE together with a duration of stay of the UE in each visited cell, a paging validity time associated with a maximum referred to as cell-age-max for the age, at the time of said paging, of the UE visit to a cell.

2. A CN entity according to claim 1, configured to:
- determine said paging validity time as "cell-age-max" - "age of the recommended cells information", where "age of the recommended cells information" is the time elapsed between the sending of said Paging message to the RAN entity and the reception of the recommended cells information by the CN entity.

3. A CN entity according to claim 2, wherein:
- "cell-age-max" is configured in said CN entity.

4. A CN entity according to any of claims 1 to 3, configured to:
- receive said recommended cells information at release of a signalling connection established for said UE, such as during a S1-Release procedure.

5. A Radio Access Network RAN entity, such as eNB or RNC or BSC, capable of receiving a Paging message from a Core Network entity such as MME or SGSN, for paging of a User Equipment UE, said RAN entity configured to:
- receive, in a Paging message containing recommended cells information for said paging, said recommended cells information including cells visited by said UE together with a duration of stay of the UE in each visited cell, a paging validity time associated with a maximum referred to as cell-age-max for the age, at the time of said paging, of the UE visit to a cell,
- determine if a recommended cell is eligible for paging the UE, based on information including said duration of stay and paging validity time.

6. A RAN entity according to claim 5, configured to:
- determine if cell(1) duration-of stay + cell(2) duration-of-stay + .... + cell(N-1) duration-of-stay < paging-validity-time
- if cell(1) duration-of stay + cell(2) duration-of-stay + .... + cell(N-1) duration-of-stay < paging-validity-time, decide that cell(N) is eligible for paging,
- otherwise decide that cell(N) is not eligible for paging,
where "cell(n) duration-of-stay" is the duration of stay in a cell noted cell(n),
where cell(1), cell(2), .... cell(N-1), cell(N) include cells listed in the order the UE visited the cells.

7. A method for paging optimisation in a mobile network, said method comprising at least one step performed by at least one of a CN entity and a RAN entity configured according to any of claims 1 to 6.
